Europäisches Patentamt

European Patent Office

Office européen des brevets

(11) Veröffentlichungsnummer: **0 252 994**
**B1**

(12) **EUROPÄISCHE PATENTSCHRIFT**

(45) Veröffentlichungstag der Patentschrift: **25.07.90**

(51) Int. Cl.⁵: **A 01 B 51/00, A 01 B 59/04**

(21) Anmeldenummer: **87900739.1**

(22) Anmeldetag: **17.12.86**

(86) Internationale Anmeldenummer:
**PCT/SU86/00131**

(87) Internationale Veröffentlichungsnummer:
**WO 87/03775 02.07.87 Gazette 87/14**

(54) **LANDWIRTSCHAFTSMASCHINE.**

(30) Priorität: **24.12.85 SU 3988674**
**24.12.85 SU 3988675**

(43) Veröffentlichungstag der Anmeldung:
**20.01.88 Patentblatt 88/03**

(45) Bekanntmachung des Hinweises auf die
Patenterteilung:
**25.07.90 Patentblatt 90/30**

(84) Benannte Vertragsstaaten:
**AT DE FR GB IT**

(56) Entgegenhaltungen:
**FR-A-2 455 849**
**GB-A-2 021 728**
**SU-A- 266 598**
**SU-A- 540 587**
**SU-A- 753 376**

(73) Patentinhaber: **TREST 'JUZHVODOPROVOD'**
**ul. Gagarina, 135/1**
**Krasnodar, 350049 (SU)**

(72) Erfinder: **SHISHKIN, Viktor Vasilievich**
**ul. Festivalnaya, 16-5**
**Krasnodar, 350049 (SU)**
Erfinder: **KRYAZHEVSKIKH, Nikolai Fedorovich**
**ul. Krasnykh partizan, 559-13**
**Krasnodar, 350049 (SU)**
Erfinder: **SHAPOVALOV, Jury Petrovich**
**ul. Turgeneva, 18**
**Krasnodar, 350049 (SU)**

(74) Vertreter: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Beschreibung

### Technisches Gebiet

Die vorliegende Erfindung bezieht sich auf das Gebiet des Landmaschinenbaus, genauer auf Landmaschinen, die verschiedene technologische Operationen auf dem Felde durchführen: Bodenbearbeitung, Aussaat, Pflanzenpflege und Einbringen der Ernte.

Am vorteilhaftesten ist der Einsatz dieser Maschinentypen auf feuchten und nassen Bodenflächen, wo Geräte mit erhöhter Zugkraft verwendet werden müssen.

### Zugrundeliegender Stand der Technik

Zur Zeit werden verschiedene Landmaschinen zur Bodenbearbeitung, Aussaat, Pflanzenpflege und Einbringung der Ernte angewendet, die einen Geräteträger, eine Vorrichtung, die ein Arbeitsorgan zur Durchführung der technologischen Operationen auf dem Felde trägt, sowie ein Mittel zur Steuerung des Arbeitsorgans einschließen.

Ein Gesamtnachteil der erwähnten Landmaschinen besteht darin, daß sie den Boden zu stark überverdichten und dadurch dessen Struktur beeinträchtigen, was sich auf die Ernte nachteilig auswirkt.

Bekannt ist beispielsweise eine Einrichtung zum Einbringen eines fließbaren Gutes in den Boden, die ein Säaggregat, ein Vortriebsorgan des Säaggregats, einen Bunker für das fließbare Saatgut sowie ein über eine Rohrleitung mit einem Windkessel verbundenes Drucksystem (siehe z.B. den SU-Urheberschein Nr. 257899, K1. AOIC 15/04, 1968) enthält. Diese Einrichtung wird mit schweren Traktoren gekoppelt, was eine starke Bodenverdichtung bedingt.

Darüber hinaus besitzt diese Einrichtung keine ausreichende Arbeitsleistung beim Durchführen der erwähnten technologischen Operationen.

Es ist ferner eine Einrichtung zum Anbau von landwirtschaftlichen Kulturen bekannt, die einen Saatgutbunker, eine am Gehäuse befestigte Antriebstrommel, ein flexibles perforiertes Element, einen Säapparat sowie eine Vorrichtung zur Bergung von landwirtschaftlichen Kulturen (siehe den SU-Urheberschein Nr. 803885, M K1. AOI C 7/00, 1979) enthält.

Diese Einrichtung wird über die zu bearbeitende Fläche von einem Traktor gezogen, und ihr sind dieselben Nachteile eigen. Außerdem besitzt sie begrenzte technologische Möglichkeiten infolge der geringen Größe der vom Vortriebsorgan erzeugten Zugkraft. Der Einsatz dieser Konstruktion ist durch das Gefälle der zu bearbeitenden Fläche und den Aufbereitungsgrad des zu bearbeitenden Bodens begrenzt.

Bekannt ist ferner eine Landmaschine, die die Aussaat von Schüttgütern vornimmt und einen Geräteträger, eine Vorrichtung, die einen Säapparat trägt, sowie Mittel zur Steuerung des Säapparates einschließt (siehe den SU-Urheberschein Nr. 908262, IPK AOIC 07/08, 1979).

Die mit einem Geräteträger gekoppelte Landmaschine bewegt sich über das Feld und nimmt die Aussaat des jeweils erforderlichen Gutes vor. Während der Bewegung des gesamten Aggregates über das Feld findet eine Überverdichtung des Bodens wegen der Einwirkung der gesamten Aggregatmasse und des mitgeführten Saatgutes sowie eine Zunahme der Energieintensität der bewegten Maschine statt.

Diese Konstruktion kann auf feuchten Böden nicht eingesetzt werden, weil die Bewegung über das Feld unmöglich wird. Die Bedienungsperson befindet sich stets in der Wirkungszone des Arbeitsorgans, was sich auf seine Arbeitsfähigkeit auswirkt. Eine niedrige Zugkraft läßt keine Vergrößerung der Arbeitsbreite beim Durchführen von entsprechenden technologischen Operationen zu, was die Durchführungsdauer der landwirtschaftlichen Arbeit erhöht.

Das Ziel der Erfindung ist die Beseitigung der vorerwähnten Nachteile der beschriebenen Vorrichtungen.

### Offenbarung der Erfindung

Der Erfindung liegt die Aufgabe zugrunde, eine Landmaschine zu schaffen, in der eine Einrichtung zur Verschiebung des Arbeitsorgans über die Feldoberfläche vorhanden ist, die eine Senkung des auf den Boden ausgeübten spezifischen Druckes sowie eine Erhöhung der Zugkraft am Arbeitsorgan gewährleistet.

Die gestellte Aufgabe ist dadurch gelöst, daß die Landmaschine, die einen Geräteträger, eine Vorrichtung, die ein Arbeitsorgan mit Zugstange zur Durchführung der technologischen Operationen auf dem Felde trägt, sowie Mittel zur Arbeitsorgansteuerung einschließt, erfindungsgemäß eine Einrichtung zur Verschiebung des Arbeitsorgans über die Feldoberfläche besitzt, die eine luftdichte Kammer mit Fenster einschließt, eine Quelle eines in die Kammer unter Druck eingepumpten Fluidums sowie einen auf eine Trommel aufgewickelten flexiblen Schlauch mit einem in diesem verlegten Zugelement enthält, an dessen aus dem freien Schlauchende hervortretenden Teil eine Vorrichtung angebracht ist, die das Arbeitsorgan trägt und mit dem flexiblen Schlauch beweglich verbunden ist, wobei das freie Schlauchende durch die Kammer hindurchgeführt, nach außen umgestülpt und im Kammerfenster solcherweise hermetisch befestigt ist, daß der dabei entstandene Ringraum mit der Kammer in Verbindung steht und unter der Wirkung des Fluidums sein Volumen ändert, wodurch der Schlauch über das Feld bewegt wird und die das Arbeitsorgan tragende Vorrichtung vor sich her schiebt.

Diese konstruktive Ausführung der Landmaschine gestattet es, ihr Gewicht und demnach die Verdichtung des zu bearbeitenden Bodens erheblich zu verringern sowie die Zugkraft am Ausgang zum besseren Durchzug des Arbeitsorgans zu erhöhen.

Zur Erweiterung der technologischen Möglichkeiten muß die Trommel auf der Achse reversierbar angebracht sein.

Zum bequemeren Betrieb können die luftdichte Kammer, die Fluidumquelle und die Trommel auf dem Geräteträger angeordnet sein.

Zur Gewährleistung der Rotationsbewegung des Arbeitsorgans müssen die Enden des Zugelementes mit dem Schlauch verbunden sein.

Eine der Ausführungsformen der vorliegenden Konstruktion sieht vor, daß die das Arbeitsorgan tragende Vorrichtung in Gestalt einer zwischen dem Schlauch und dem Zugelement angeordneten Zugstange ausgebildet ist.

Eine solche Ausführung der Vorrichtung vereinfacht die gesamte Konstruktion und ermöglicht es, die Zugkraft am Arbeitsorgan zu erhöhen.

Eine weitere Ausführungsform der das Arbeitsorgan tragenden Vorrichtung enthält ein torusförmiges Detail, das im Ringraum des umgestülpten Schlauchabschnittes angeordnet ist, einen kugelförmigen Körper, dessen Durchmesser größer als die Offnung des torusförmigen Details ist und der sich im Schlauch unmittelbar vor dem erwähnten Detail befindet, sowie ein Stützelement, das mit dem kugelförmigen Körper über einen abgefederten Stock verbunden ist und ein Kragstück zur Befestigung der Zugstangs des Arbeitsorgansträgt, wobei das Zugorgan durch einen im kugelförmigen Körper vorgesehenen Kanal hindurchgeführt ist.

Diese Ausführung der Vorrichtung erlaubt es. ein beliebiges Arbeitsorgan in der Landmaschine unabhängig von den zur Durchführung der technologischen Operationen auf dem Felde erforderlichen Zugkräften zu verwenden sowie die Stoßkraft am Arbeitsorgan zu steigern.

Zweckmäßigerweise enthält die Landmaschine eine weitere Einrichtung zur Verschiebung des Arbeitsorgans, die ähnlich der ersteren ausgeführt ist und parallel zu ihr liegt, wobei die das Arbeitsorgan tragenden Vorrichtungen mittels einer Stange miteinander verbunden sein müssen, die aus miteinander verkuppelten Zugstangen besteht.

Dies gestattet es, die Bewegung der Einrichtung und damit die Verschiebung des Arbeitsorgans zu steuern und die Arbeitsbreite des Arbeitsorgans beim Durchführen von technologischen Operationen zu vergrößern.

Eine weitere Ausführungsform sieht vor, daß im Innern des Schlauch zusätzliche Schläuche für die dem Arbeitsorgan zur Durchführung der technologischen Operationen auf dem Felde zugeleiteten Komponenten vorhanden sind, die mit auf dem Geräteträger angeordneten Behältern in Verbindung gesetzt und durch den Kanal des kugelförmigen Körpers hindurchgeführt sind.

Diese Ausführung erlaubt es der Bedienungsperson, die Funktion des Arbeitsorgans in verschiedenen Punkten des zu bearbeitenden Feldes vom Geräteträger aus zu kontrollieren sowie das Sortiment der anwendbaren Komponenten zu erweitern.

Also kann festgestellt werden, daß die vorliegende Landmaschine in der erfindungsgemäßen konstruktiven Ausführung es ermöglicht, beim Durchführen der technologischen Operationen auf dem Felde auf die allgemein bekannten Lösungen zu verzichten und zur Verschiebung des Arbeitsorgans eine originelle Einrichtung vereinfachter Konstruktion anzuwenden.

Kurze Beschreibung der Zeichnungen

Im folgenden wird die vorliegende Erfindung in einer eingehenden Beschreibung konkreter Ausführungsbeispiele derselben unter Bezugnahme auf beiliegende Zeichnungen erläutert, in denen es zeigt:

Fig. 1 schematische Darstellung der Gesamtansicht der Landmaschine, in zusammengebautem Zustand;

Fig. 2 Einrichtung zur Verschiebung des Arbeitsorgans und Ausführungsform der das Arbeitsorgan tragenden Vorrichtung;

Fig. 3 weitere Ausführungsform der das Arbeitsorgan tragenden Vorrichtung.

Beste Ausführungsform der Erfindung

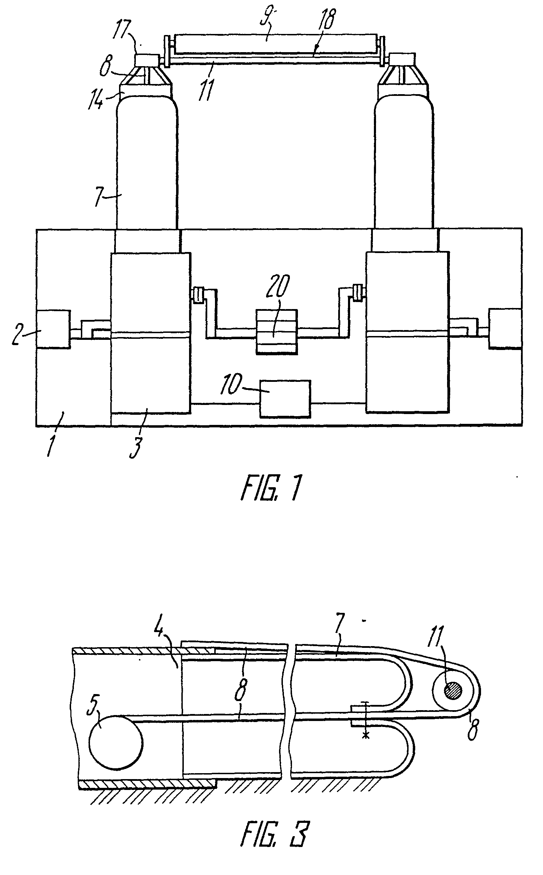

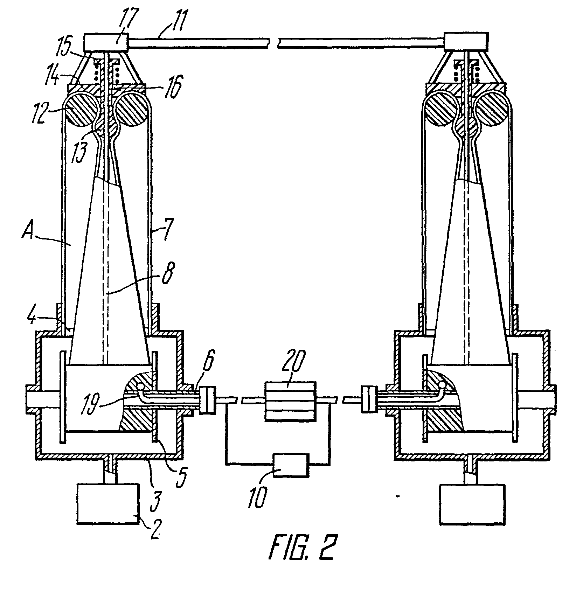

Die Landmaschine (Fig. 1, 2) enthält einen Geräteträger 1, auf dem eine Quelle für ein Fluidum, beispielsweise ein Gas-Luft-Gemisch, eine luftdichte Kammer 3 mit Fenster 4, in die Gas unter Druck eingepumpt wird, sowie eine Trommel 5 angeordnet sind, die auf einer Hohlwelle 6 angebracht ist, welche mit einem (in der Zeichnung nicht abgebildeten) Antriebsmotor des Geräteträgers 1 kinematisch verbunden ist. Auf die Trommel 5 ist ein flexibler Schlauch 7 aufgewickelt, in dessen Innerem ein Zugelement 8 verlegt ist. Die Enden des Schlauches 7 sind mit dem Zugelement 8 verbunden. Die Trommel 5 kann in der Kammer 3 bzw. außerhalb derselben angeordnet sein, wobei das freie Ende des Schlauches 7 durch die Kammer 3 hindurchgeführt, nach außen umgestülpt und im Kammerfenster 4 hemetisch dicht befestigt sein muß. Der nach außen umgestülpte Schlauch 7 bildet einen Ringraum A, der mit der Kammer 3 in Verbindung steht und sein Volumen beim Abwickeln des Schlauches von der Trommel 5 fortwährend ändert. Die Trommel 5 ist auf einer Welle 6 reversierbar angebracht. Das Zugelement 8 tritt mit einem seiner Teile aus dem freien Ende des Schlauches 7 hervor und wirkt mit der daran angebrachten Vorrichtung zusammen, die ein Arbeitsorgan 9 zum Durchführen der technologischen Operationen auf dem Felde trägt. Die Vorrichtung ist mit dem Schlauch 7 beweglich verbunden. Auf dem Geräteträger 1 sind Mittel 10 zur Steuerung des Arbeitsorgans 9 montiert.

Die luftdichte Kammer 3, die Fluidumquelle 2 und die Trommel 5 mit dem darauf aufgewickelten flexiblen Schlauch 7 stellen in ihrer Gesamtheit die Einrichtung dar, die zur Verschiebung der das Arbeitsorgan 9 tragenden Vorrichtung dient.

Eine einfachste Ausführungsform der das Arbeitsorgan 9 tragenden Vorrichtung ist in Fig. 3 dargestellt Sie besteht aus einer Zugstange 11, die zwischen dem Schlauch 7 und dem Zugelement 8 angeordnet ist.

Eine weitere Ausführungsform der das Arbeitsorgan tragenden Vorrichtung ist in Fig. 2 dargestellt. Die Vorrichtung enthält ein torusförmiges Detail 12, das im Ringraum A des umgestülpten Abschnittes des Schlauches 7 angeordnet ist, einen kugelförmigen Körper 13, dessen Durchmesser größer als die Offnung des torusförmigen Details 12 ist und der sich im Schlauch 7 unmittelbar vor dem Detail 12 befindet, sowie ein Stützelement 14, das außerhalb des Schlauches 7 angebracht und mit dem kugelförmigen Körper 13 über einen abgefederten hohlen Stock 16 verbunden ist. Im kugelförmigen Körper 13 ist ein Kanal 16 ausgeführt. Am Stützelement 14 ist ein Kragstück 17 zur Befestigung der Zugstange 11 des Arbeitsorgans 9 montiert. Der Kanal 16 und der hohle Stock 15 sind zum Durchtritt des Zugelementes 8 bestimmt, das um die Zugstangen 11 (Fig. 3) läuft und am Schlauch 7 befestigt ist.

Zur Vergrößerung der Arbeitsbreite des Arbeitsorgans beim Durchführen der technologischen Operationen auf dem Felde und Umkehr seiner Bewegungsrichtung besitzt die Landmaschine eine zweite Einrichtung zur Verschiebung des Arbeitsorgans, die ähnlich der ersteren ausgeführt ist und parallel zu ihr liegt. In diesem Fall sind die Zugstangen 11 miteinander fest verkuppelt und bilden eine Stange 18. Zusätzlich sind im Inneren des Schlauches 7 Schläuche 19 für die Zuführung von dem Arbeitsorgan 9 zugeleiteten Komponenten untergebracht, die mit auf dem Geräteträger 1 angeordneten Behältern 20 in Verbindung gesetzt sind. Die Schläuche 19 sind durch den Kanal 16 des kugelförmigen Körpers 13 und den hohlen Stock 15 hindurchgeführt.

Die Landmaschine arbeitet auf die folgende Weise.

Die Bedienungsperson fährt auf dem Geräteträger an das Feld heran. Danach befestigt er das je nach der durchzuführenden technologischen Operation erforderliche Arbeitsorgan 9 an der Zugstange 11 und schaltet die Quelle 2 des Fluidums ein, das in die luftdichten Kammern 3 und Schläuche 7 gelangt, wobei diese von der Trommel 5 abgewickelt werden. Die Schläuche 7 schieben, indem sie sich über die Feldoberfläche bewegen, die das Arbeitsorgan 9 tragende Vorrichtung vor sich her. Die Umkehr der Bewegungsrichtung des Arbeitsorgans 9 auf dem Feld erfolgt durch Vergrößerung bzw. Verminderung des Volumens des Ringraumes A in einem der Schläuche 7. Während der Verschiebung des Arbeitsorgans über das Feld werden über die im Innern der Schläuche verlegten Mittel 10 zur Arbeitsorgansteuerung verschiedene Befehle auf Ausführungsmechanismen des Arbeitsorgans 9 übertragen.

Beim Durchführen von Arbeiten, die eine einseitige Bewegung des Arbeitsorgans erfordern, beispielsweise beim Einebnen des Bodens, Abrechen des Strohs, Aufhalten des Schnees wird vorzugsweise eine Vorrichtung verwendet, die ein Arbeitsorgan in Gestalt einer Zugstange 11 trägt, die zwischen dem Schlauch 7 und dem Zugelement 8 angeordnet ist. In diesem Fall verschiebt der Schlauch, indem er von der Trommel 5 abgewickelt wird, das Arbeitsorgan 9 im Leerlauf in die Arbeitsstellung und wird dann durch Reversierung der Trommel 5 auf dieselbe erneut aufgewickelt, wobei das die jeweilige nützliche Arbeit verrichtende Arbeitsorgan 9 von diesem Schlauch 7 auf sich zu bewegt wird. Dabei wird das Fluidum aus den Ringräumen A verdrängt und in die Quelle 2 bzw. in die Atmosphäre abgeleitet. Beim Durchführen von Arbeiten, die bei der Verschiebung des Arbeitsorgans das Anlegen von Kräften beiderseits des zu bearbeitenden Feldes erfordern, benutzt man eine Vorrichtung, die das Arbeitsorgan trägt und ein torusförmiges Detail 12, einen kugelförmigen Körper 13 sowie ein Stützelement 14 enthält. Das Fluidum stülpt, indem es auf das Detail 12 einwirkt, den Schlauch 7 um, der das Stützelement 14 anstößt, das das Arbeitsorgan 9 bewegt. Die Rückbewegung des Arbeitsorgans erfolgt in derselben Weise wie vorstehend beschrieben.

Es sei bemerkt, daß das Zugorgan 8 außer der Zugkraft auch ein Drehmoment zu erzeugen vermag.

In diesem Fall wird beispielsweise der allgemein bekannte Kettentrieb angewendet.

Während des Betriebes werden aus den Behältern 20 auf die bekannte Weise über die Schläuche 19 dem Arbeitsorgan 9 verschiedene, für die jeweiligen technologischen Operationen notwendige Komponenten zugeführt, so beispielsweise Berieselungswasser, auszusäendes Saatgut, Düngemittel für die Kopfdüngung u.s.w.

## Gewerbliche Verwertbarkeit

Die vorliegende Erfindung kann sowohl für landwirtschaftliche Arbeiten wie auch in anderen technischen Gebieten, beispielsweise zur Beförderung von verschiedenen Lasten, zur Gesteinsförderung im Bergbau, für die Zustellung von verschiedenen Gütern über Wasserhindernisse und im schwerpassierbaren Gelände, zur Beladung von Schiffen beim Fehlen von entsprechend ausgerüsteten Anlegestellen effektiv angewendet werden.

## Patentansprüche

1. Landmaschine, die einen Geräteträger (1), eine Vorrichtung, die ein Arbeitsorgan (9) mit Zugstange (11) zum Durchführen der technologischen Operationen auf dem Felde trägt, sowie Mittel (10) zur Arbeitsorgansteuerung einschließt, dadurch gekennzeichnet, daß sie eine Einrichtung zur Verschiebung des Arbeitsorgans (9) über die Feldoberfläche besitzt, die eine luftdichte Kammer (3) mit Fenster (4), eine Quelle (2) eines Fluidums, das in die Kammer (3) unter Druck eingepumpt wird, sowie einen auf eine Trommel (5) aufgewickelten flexiblen Schlauch (7) mit einem in diesem verlegten Zugelement (8) enthält, an dessen aus dem freien Ende des Schlauches (7) hervortretendem Teil eine Vorrichtung angebracht ist, die das Arbeitsorgan (9) trägt und mit dem flexiblen Schlauch (7) beweglich verbunden ist, wobei das freie Ende des Schlauches (7) durch die Kammer (3) hindurchgeführt, nach außen umgestülpt und im Fenster (4) der Kammer (3) hemetisch dicht befestigt ist, derart, daß der dabei entstandene Ringraum (A) mit der Kammer in Verbindung steht und unter der Wirkung des Fluidums sein Volumen ändert, wodurch er den Schlauch (7) über das Feld bewegt, der die das Arbeitsorgan (9) tragende Vorrichtung vor sich her schiebt.

2. Landmaschine nach Anspruch 1, dadurch gekennzeichnet, daß die Trommel (5) auf einer Welle (6) reversierbar angebracht ist.

3. Landmaschine nach Anspruch 1, dadurch gekennzeichnet, daß die luftdichte Kammer (3), die Fluidumquelle (2) und die Trommel (5) auf dem Geräteträger (1) angeordnet sind.

4. Landmaschine nach Anspruch 1, dadurch gekennzeichnet, daß die Enden des Schlauches (7) mit dem Zugelement (8) verbunden sind.

5. Landmaschine nach Anspruch 1, dadurch gekennzeichnet, daß die das Arbeitsorgan (9) tragende Vorrichtung in Gestalt einer Zugstange (11) ausgebildet ist, die zwischen dem Schlauch (7) und dem Zugelement (8) angeordnet ist.

6. Landmaschine nach Ansprüchen 1—4, dadurch gekennzeichnet, daß die das Arbeitsorgan (9) tragende Vorrichtung ein torusförmiges Detail (12), das im Ringraum (A) des umgestülpten Abschnittes des Schlauches (7) angeordnet ist, einen kugelförmigen Körper (13), dessen Durchmesser größer als die Offnung des torusförmigen Details (12) ist und der sich im Schlauch (7) unmittelbar vor dem erwähnten Detail (12) befindet, sowie ein Stützelement (14) enthält, das mit dem kugelförmigen Körper (13) über einen abgefederten Stock (15) verbunden ist und ein Kragstück (17) zur Befestigung der Zugstange (11) des Arbeitsorgans (9) trägt, wobei das Zugelement (8) durch einen im kugelförmigen Körper (13) vorgesehenen Kanal (16) hindurchgeführt ist.

7. Landmaschine nach Ansprüchen 1, 5, 6, dadurch gekennzeichnet, daß sie eine weitere Einrichtung zur Verschiebung des Arbeitsorgans (9) enthält, die ähnlich der ersteren ausgeführt ist und parallel zu ihr liegt, wobei die das Arbeitsorgan (9) tragenden Vorrichtungen durch eine Stange (18) miteinander verbunden sind, die aus miteinander fest gekuppelten Zugstangen (11) besteht.

8. Landmaschine nach Ansprüchen 1, 5, 6, dadurch gekennzeichnet, daß im Innern des Schlauches (7) Schläuche (19) für die dem Arbeitsorgan (9) zur Durchführung der technologischen Operationen auf dem Felde zugeleiteten Komponenten zusätzlich untergebracht sind, die mit auf dem Geräteträger (1) angeordneten Behältern (20) in Verbindung gesetzt und durch den Kanal (16) im kugelförmigen Körper (13) hindurchgeführt sind.

**Revendications**

1. Machine agricole qui comporte un support d'appareils (1), un dispositif qui porte un organe de travail (9) avec tige de traction (11) pour accomplir des opérations technologiques sur le champ, ainsi que des moyens (10) pour la commande de l'organe de travail, caractérisée en ce qu'elle possède un système pour le déplacement de l'organe de travail (9) sur la surface du champ, qui contient une chambre (3) étanche à l'air avec fenêtre (4), une source (2) d'un fluide qui est pompé sous pression dans la chambre (3) ainsi qu'un tuyau flexible (7) enroulé sur un tambour (5) avec un élément de traction (8) qui est noyé dans celui-ci, à la partie duquel, sortant de l'extrémité libre du tuyau flexible (7), est prévu un dispositif qui porte l'organe de travail (9) et est solidaire en mouvement du tuyau flexible (7), ainsi l'extrémité libre du tuyau flexible (7) traverse la chambre (3), est retournéevers l'extérieur et est fixée de façon hermétiquement étanche dans la fenêtre (4) de la chambre (3) de façon que l'espace annulaire (A) qui en résulte se trouve en liaison avec la chambre et que sous l'effet du fluide, son volume change ainsi il déplace le tuyau flexible (7) sur le champ, lequel pousse devant lui le dispositif portant l'organe de travail (9).

2. Machine agricole selon la revendication 1, caractérisée en ce que le tambour (5) est agencé rotatif de manière réversible sur un arbre (6).

3. Machine agricole selon la revendication 1, caractérisée en ce que la chambre (3) étanche à l'air, la source de fluide (2) et le tambour (5) sont prévus sur le support d'appareils (1).

4. Machine agricole selon la revendication 1, caractérisée en ce que les extrémités du tuyau flexible (7) sont reliées à l'élément de traction (8).

5. Machine agricole selon la revendication 1, caractérisée en ce que le dispositif portant l'organe de travail (9) a la configuration d'une tige de traction (11), qui est agencée entre le tuyau flexible (7) et l'élément de traction (8).

6. Machine agricole selon les revendications 1-4, caractérisée en ce que le dispositif portant l'organe de travail (9) contient un détail (12) en forme de tore qui est agencé dans l'espace annulaire (A) du segment retourné du tuyau flexible (7), un corps sphérique (13) dont le diamètre est plus grand que l'ouverture du détail (12) en forme de tore et qui se trouve dans le tuyau flexible (7) directement devant ledit détail (12) ainsi qu'un élément d'appui (14) qui est relié avec le corps sphérique (13) par une canne garnie de ressorts (15) et porte une collerette (17) pour la fixation de la tige de traction (11) de l'organe de travail (9), et l'élément de traction (8) traverse un canal (16) prévu dans le corps sphérique (13).

7. Machine agricole selon les revendications 1, 5, 6, caractérisée en ce qu'elle contient un autre système pour le déplacement de l'organe de travail (9) qui est semblable au premier et lui est parallèle, les dispositifs portant l'organe de travail (9) étant reliés l'un à l'autre par une tige (18) qui se compose de plusieurs tiges de traction (11) solidement reliées les unes aux autres.

8. Machine agricole selon les revendications 1, 5, 6, caractérisée en ce qu'à l'intérieur du tuyau flexible (7) sont prévus des tuyaux flexibles (19) supplémentaires pour les composants ajoutés à l'organe de travail (9) pour l'accomplissement des opérations technologiques sur le champ, lesquels sont en liaison avec les récipients (20) placés sur le support d'appareils (1) et passent à travers le canal (16) dans le corps sphérique (13).

**Claims**

1. An agricultural machine comprising an instrument carrier (1), a device carrying a working member (9) with a draw rod (11) for carrying out the technical operations on the field, and means (10) for controlling the working member, characterised in that it has a device for displacing the working member (9) over the surface of the field, which device contains an airtight chamber (3) with a window (4), a source (2) of a fluid which is pumped under pressure into the chamber (3), and a flexible hose (7) wound on to a drum (5) and having a draw element (8) placed in the hose, a device being arranged on that part of the element (8) which projects from the free end of the hose (7), which device carries the working member (9) and is movably joined to the flexible hose (7), the free end of the hose (7) being guided through the chamber (3), inverted towards the outside and fastened with a hermetic seal in the window (4) of the chamber (3), in such a way that the resulting annular space (A) is in connexion with the chamber and changes its volume under the action of the fluid, whereby it moves the hose (7) over the field, which hose pushes before it the device carrying the working member (9).

2. An agricultural machine according to Claim 1, characterised in that the drum (5) is arranged so as to be reversible on a shaft (6).

3. An agricultural machine according to Claim 1, characterised in that the airtight chamber (3), the source of fluid (2) and the drum (5) are arranged on the instrument carrier (1).

4. An agricultural machine according to Claim 1, characterised in that the ends of the hose (7) are joined to the draw element (8).

5. An agricultural machine according to Claim 1, characterised in that the device carrying the working member (9) is constructed in the form of a draw rod (11) which is arranged between the hose (7) and the draw element (8).

6. An agricultural machine according to Claims 1—4, characterised in that the device carrying the working member (9) contains a torus-shaped part (12) which is arranged in the annular space (A) of the inverted portion of the hose (7); a spherical body (13) whose diameter is greater than the opening of the torus-shaped part (12) and which is located in the hose (7) directly in front of the said part (12); and a supporting element (14) which is joined to the spherical body (13) via a sprung pole (15) and carries a collar piece (17) for fastening the draw rod (11) of the working member (9), the draw rod (8) being guided through a duct (16) provided in the spherical body (13).

7. An agricultural machine according to Claims 1, 5, 6, characterised in that it contains a further device for displacing the working member (9), which is of similar construction to the first device and lies parallel to it, the devices carrying the working member (9) being joined together by a rod (18) consisting of draw rods (11) firmly coupled together.

8. An agricultural machine according to Claims 1, 5, 6, characterised in that hoses (19) are additionally accommodated inside the hose (7) for the components conveyed to the working member (9) for carrying out the technical operations on the field, which components are connected with containers (20) arranged on the instrument carrier (1) and are guided through the duct (16) in the spherical body (13).

FIG. 1

FIG. 3

1

FIG. 2